# EUROPÄISCHE PATENTSCHRIFT

(11) **EP 2 928 665 B1**
(45) Veröffentlichungstag und Bekanntmachung des Hinweises auf die Patenterteilung: **22.02.2017**
(21) Anmeldenummer: 13802324.7
(22) Anmeldetag: 04.12.2013
(51) Int. Cl.: B29C 51/00, B31B 50/74, B29L 22/00, B65D 8/00, B65D 1/26

(54) **VERFAHREN ZUR HERSTELLUNG EINES KOMBI-VERPACKUNGSBEHÄLTERS SOWIE KOMBI-VERPACKUNGSBEHÄLTER**
METHOD FOR PRODUCING A COMBI-PACKING CONTAINER AND COMBI-PACKING CONTAINER
PROCÉDÉ DE FABRICATION D'UN RÉCIPIENT D'EMBALLAGE COMBINÉ ET RÉCIPIENT D'EMBALLAGE COMBINÉ

(30) Priorität: 05.12.2012 AT 505632012
(43) Veröffentlichungstag der Anmeldung: 14.10.2015
(73) Patentinhaber: Rundpack AG, 9444 Diepoldsau (CH)
(72) Erfinder: RIETHMÜLLER, Steffen, CH-9443 Widnau (CH)
(74) Vertreter: Burger, Hannes
(86) Internationale Anmeldenummer: PCT/EP2013/075455
(87) Internationale Veröffentlichungsnummer: WO 2014/086814

(56) Entgegenhaltungen:
- EP-A2- 1 650 134
- WO-A1-2011/092142
- DE-U1-202011 100 097

## Beschreibung

Die Erfindung betrifft ein Verfahren zur Herstellung eines Kombi-Verpackungsbehälters sowie einen nach diesem Verfahren hergestellten Kombi-Verpackungsbehälter, wie dies in den Ansprüchen 1 und 13 beschrieben ist.

Ein Verfahren zur Herstellung eines konischen Kunststoffbehälters mit einem nach außen abstehenden Öffnungsrand durch Tiefziehen ist aus der DE 33 26 369 C2 bzw. der EP 0 102 522 A1 sowie aus der DE 20 2011 100097 U1 bekannt geworden. Dabei wird der Kunststoffbehälter durch Tiefziehen einer Kunststofffolie gleichmäßiger Dicke gebildet, wobei der Kunststoffbehälter in der Tiefziehform mit einer Schicht aus einem andersartigen Material verbunden wird, welches jedoch mit dem Kunststoffmaterial nicht verschweißt. Diese Schicht aus dem andersartigen Material wird in Form einer Manschette gebildet, welche vor dem Tiefziehen in der Tiefziehform so angeordnet wird, dass ihre Unter- und Oberkante beim Tiefziehen von der Kunststofffolie eingeschlossen wird. Dabei kann die Folie beim Tiefziehen in dem für den Kontakt mit der Manschette vorgesehenen Bereich auf eine minimale, die Dichtigkeit des herzustellenden Behälters gewährleistende Dicke gezogen werden. Zum Stapeln mehrerer gleichartiger Behälter ist im Bereich seines offenen Endes eine geringfügig nach außen abstehende Stapelschulter vorgesehen, welche sich im Bereich des offenen Endes an dem nach außen abstehenden Öffnungsrand des weiteren Behälters abstützt. Der Wandabschnitt zwischen der Stapelschulter und dem Öffnungsrand ist dabei gegenkonisch bezüglich des zum Boden hin verlaufenden Wandabschnitts ausgebildet, um so die Stapelbildung zu ermöglichen. Dabei war in eigenen Arbeitsvorgängen einerseits die Stapelschulter vor dem Tiefziehen auszubilden und andererseits das dem Boden zugewendete untere Ende umzubördeln. Nachteilig dabei ist, dass nur eine geringe Formgebungsmöglichkeit der Behälterwand zur Verfügung stand.

Aus der DE 10 2009 055 986 A1 ist eine Vorrichtung zum Auftragen von Klebstoff sowie eine Maschine und ein Verfahren zum Herstellen von Papierbechern bekannt geworden. Aus einem zugeschnittenen Papiersegment wird eine Becherhülse hergestellt und anschließend im Zuge des Klebstoffauftrages ein Teilabschnitt der Becherhülse nach innen verformt. Die Stempel zum Klebstoffauftrag sind als Kreisringsegmente ausgebildet und in radialer Richtung bezüglich des Gegenwerkzeuges verstellbar. Durch die Formgebung des Gegenwerkzeuges erfolgt nach dem Einsetzen der Becherhülse das Vorbrechen und das damit verbundene Einwärtsformen des bodennahen Bereichs durch die einzelnen Stempel. Anschließend wird zur Bildung des flüssigkeitsdichten Bechers ein eigenes Bodenelement eingesetzt und durch Umschlagen des vorgebrochenen Abschnitts der Becherhülse verbunden. Ein zusätzlicher Innenbecher aus einem Kunststoffmaterial, welcher an die vorgeformte Becherhülse angeformt wird, ist hier nicht vorgesehen.

Der vorliegenden Erfindung liegt die Aufgabe zugrunde, ein Verfahren anzugeben, mit welchem Kombi-Verpackungsbehälter hergestellt werden können, die eine große Formenvielfalt bei einem gleichzeitig einwandfreien Druckbild sowie darüber hinaus auch noch eine ausreichend hohe Gesamtfestigkeit aufweisen. Es soll aber auch ein Kombi-Verpackungsbehälter geschaffen werden, der in Richtung seiner Längsachse eine ausreichende Stabilität mit einem einwandfreien Druckbild trotz der räumlichen Umformung des stützenden Außenteils aufweist.

Die Aufgabe der Erfindung wird durch die im Anspruch 1 angegebenen Verfahrensschritte gelöst. Die sich aus der Merkmalskombination dieses Anspruches ergebenden Vorteile liegen darin, dass durch den Einsatz eines mehrfach über den Umfang geteilt ausgebildeten Spreizkerns das in der unverformten Ausgangsform sowie im Axialschnitt gesehen eine überwiegend geradlinig verlaufende Mantellinie aufweisende Außenteil nicht nur überdehnt, sondern auch bleibend räumlich verformt werden kann. Damit erfolgt ein Überdehnen bzw. Überstrecken in den dafür vorgesehenen Längsabschnitten, wodurch in späterer Folge bei der Ausbildung des Innenbehälters das Kunststoffmaterial an den vorgeformten und umgeformten Außenteil angelegt werden kann. Damit wird auch bei Kombi-Verpackungsbehältern, die als Außenteil eine Kartonmanschette aufweisen, eine bislang nicht erreichte Formvielfalt ermöglicht. Damit kann nicht nur die gute Druckqualität sowie auch die Festigkeit des gesamten Behältnisses gegenüber bisher bekannten Behältern mit Kartonmanschette beibehalten, wenn nicht zusätzlich noch erhöht werden. Durch die gewählte Überdehnung bzw. Streckung des Werkstoffs des Außenteils wird eine Faltenbildung vermieden, wodurch ebenfalls das Erscheinungsbild und der Gesamteindruck trotz der räumlichen Umformung unverändert beibehalten bleiben.

Weiters ist ein Vorgehen gemäß den im Anspruch 2 angegebenen Merkmalen vorteilhaft, weil dadurch ein zusätzlicher Handlingvorgang für das Umsetzen des Außenteils vermieden wird und auch Formkosten eingespart werden können.

Eine weitere vorteilhafte Vorgehensweise ist im Anspruch 3 beschrieben, wodurch aufgrund der noch im Werkstoff enthaltenen Feuchtigkeit eine rissfreie Umformung in den dafür vorgesehenen Längsabschnitten ermöglicht wird. Dadurch kann für den Umformvorgang ein Abreißen der einzelnen Zellulosefasern innerhalb des Außenteils bzw. Zuschnitts vermieden werden, wodurch die einzelnen Zellulosefasern leichter im Umformungsbereich relativ zueinander verlagert werden können.

Vorteilhaft ist auch eine Verfahrensvariante gemäß Anspruch 4, weil dadurch gerade in jenem Außenbereich des umzuformenden Außenteils das Umformen und Anlegen desselben an die Kontur der Außenform erleichtert wird und damit das bereits aufgebrachte Druckbild unbeschädigt erhalten bleibt.

Weiters ist ein Vorgehen gemäß den im Anspruch 5 angegebenen Merkmalen vorteilhaft, weil dadurch die Temperaturbelastung des umzuformenden Außenteils an seiner Innenseite geringer gehalten werden kann und so ein zu rasches Auftrocknen vermieden bzw. das Entweichen von Feuchtigkeit verlangsamt wird.

Eine weitere vorteilhafte Vorgehensweise ist im Anspruch 6 beschrieben, wodurch aufgrund der unterschiedlichen Abbindezeit und der damit verbundenen Aushärtung der Klebemittel auch noch besser auf den durchzuführenden Umformvorgang Bedacht genommen werden kann. Damit wird es möglich, die bereitgestellten Zuschnitte kurz vor dem Umformvorgang in deren Endabschnitten miteinander zu verbinden und trotzdem nachträglich eine umfänglich durchgehend bleibende Verformung in das Außenteil einformen zu können.

Vorteilhaft ist auch eine Verfahrensvariante gemäß Anspruch 7, weil dadurch das vorgeformte Außenteil in dessen Überlappungsbereich mit einer ausreichenden Haftkraft zur maßhaltigen Beibehaltung der Außenform gehalten wird, jedoch eine ungehinderte Umformung über den gesamten Umfang durchgeführt werden kann. Damit können gerade im Bereich der doppelten Wandstärke des Außenteils auch hier die entsprechenden Umformungen im Bereich der dafür vorgesehenen Längsabschnitte einwandfrei durchgeführt werden.

Weiters ist ein Vorgehen gemäß den im Anspruch 8 angegebenen Merkmalen vorteilhaft, weil dadurch erst nach der erfolgten Umformung in den dafür vorgesehenen Längsabschnitten über die gesamte Länge des Überlappungsbereichs eine feste und stabile Verbindung zwischen den Endabschnitten des Zuschnitts erreicht wird.

Eine weitere vorteilhafte Vorgehensweise ist im Anspruch 9 beschrieben, wodurch so bereits am vorgeformten Außenteil eine einwandfreie Stapelschulter ausgebildet werden kann, um so gleichartig ausgebildete Kombi-Verpackungsbehälter einwandfrei ineinander stapeln zu können, ohne dass dabei ein gegenseitiges Verklemmen erfolgt.

Vorteilhaft ist auch eine Verfahrensvariante gemäß Anspruch 10, weil dadurch in ihrer Raumform exakt vordefinierte Längsabschnitte am Kombi-Verpackungsbehälter ausgebildet werden können und so die Formenvielfalt besser auf die Kundenwünsche angepasst werden kann.

Weiters ist ein Vorgehen gemäß den im Anspruch 11 angegebenen Merkmalen vorteilhaft, weil dadurch markante Übergänge geschaffen werden können, welche nicht nur der Erhöhung der Formvielfalt dienen, sondern auch der Erhöhung der Festigkeit sowie Steifigkeit dienen können.

Eine weitere vorteilhafte Vorgehensweise ist im Anspruch 12 beschrieben, wodurch eine scharfe Kantenbildung vermieden und somit fließende Übergänge zwischen unmittelbar hintereinander angeordneten Längsabschnitten geschaffen werden können.

Diese Aufgabe der Erfindung wird aber auch eigenständig durch die Merkmale des Anspruches 13 gelöst. Der sich durch die Merkmale dieses Anspruches ergebende Vorteil liegt darin, dass durch den Einsatz eines mehrfach über den Umfang geteilt ausgebildeten Spreizkerns das in der unverformten Ausgangsform sowie im Axialschnitt gesehen eine überwiegend geradlinig verlaufende Mantellinie aufweisende Außenteil nicht nur überdehnt, sondern auch bleibend räumlich verformt werden kann. Damit erfolgt ein Überdehnen bzw. Überstrecken in den dafür vorgesehenen Längsabschnitten, wodurch in späterer Folge bei der Ausbildung des Innenbehälters das Kunststoffmaterial an den vorgeformten und umgeformten Außenteil angelegt werden kann. Damit wird auch bei Kombi-Verpackungsbehältern, die als Außenteil eine Kartonmanschette aufweisen, eine bislang nicht erreichte Formvielfalt ermöglicht. Damit kann nicht nur die gute Druckqualität sowie auch die Festigkeit des gesamten Behältnisses gegenüber bisher bekannten Behältern mit Kartonmanschette beibehalten, wenn nicht zusätzlich noch erhöht werden. Durch die gewählte Überdehnung bzw. Streckung des Werkstoffs des Außenteils wird eine Faltenbildung vermieden, wodurch ebenfalls das Erscheinungsbild und der Gesamteindruck trotz der räumlichen Umformung unverändert beibehalten bleiben.

Von Vorteil ist aber auch eine Ausbildung nach Anspruch 14, wodurch bereits am vorgeformten Außenteil eine einwandfreie Stapelschulter ausgebildet werden kann, um so gleichartig ausgebildete Kombi-Verpackungsbehälter einwandfrei ineinander stapeln zu können, ohne dass dabei ein gegenseitiges Verklemmen erfolgt.

Gemäß Anspruch 15 können in ihrer Raumform exakt vordefinierte Längsabschnitte am Kombi-Verpackungsbehälter ausgebildet werden und so die Formenvielfalt noch besser auf die Kundenwünsche angepasst werden.

Bei der Ausbildung gemäß Anspruch 16 können dadurch markante Übergänge geschaffen werden, welche nicht nur der Erhöhung der Formvielfalt dienen, sondern auch der Erhöhung der Festigkeit sowie Steifigkeit dienen können.

Schließlich ist aber auch eine Ausbildung, wie im Anspruch 17 beschrieben, möglich, wodurch eine scharfe Kantenbildung vermieden und somit fließende Übergänge zwischen unmittelbar hintereinander angeordneten Längsabschnitten geschaffen werden können.

Zum besseren Verständnis der Erfindung wird diese anhand der nachfolgenden Figuren näher erläutert.

Es zeigen jeweils in stark schematisch vereinfachter Darstellung:
- Fig. 1: einen Teil eines Formwerkzeugs mit seiner Außenform und einem im Formhohlraum angeordneten unverformten Außenteil, mit teilweise entferntem Spreizkern, in Ansicht geschnitten;
- Fig. 2: den Spreizkern in Draufsicht in einer Ausgangsstellung für den Umformvorgang;
- Fig. 3: einen aus einem Zuschnitt gebildeten Außenteil, vor dessen Umformung;
- Fig. 4: eine mögliche Ausbildung eines Kombi-Verpackungsbehälters in Ansicht, teilweise geschnitten;
- Fig. 5: den Kombi-Verpackungsbehälter nach Fig. 4, in schaubildlicher Darstellung;
- Fig. 6: eine weitere mögliche Ausbildung eines Kombi-Verpackungsbehälters in Ansicht;
- Fig. 7: den Kombi-Verpackungsbehälter nach Fig. 6, in schaubildlicher Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

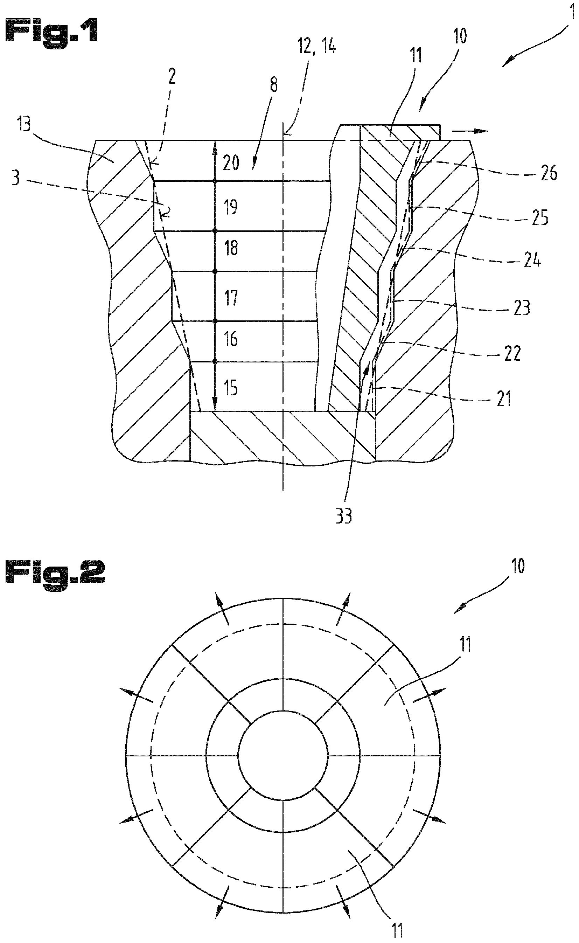

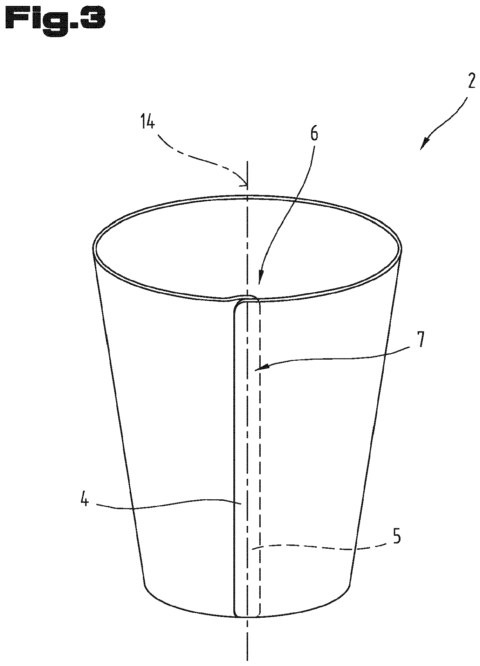

In den Fig. 1 bis 3 sind vereinfacht Teile eines Formwerkzeuges 1 gezeigt, mit welchem aus einem nicht näher dargestellten Zuschnitt ein daraus gebildetes, manschettenförmiges Außenteil 2 räumlich umgeformt werden kann. Das Außenteil 2 ist in der Fig. 3 in seiner unverformten Ausgangsform gezeigt.

Wie allgemein bekannt ist, wird zumeist aus einer ebenen Lage bzw. Schicht aus einem faserförmigen Zellulosewerkstoff ein Zuschnitt gebildet und dieser zuerst zu einem Mantel geformt, welcher im Axialschnitt gesehen eine überwiegend geradlinig verlaufende Mantellinie 3 aufweist. Dabei wird zumeist eine kegelstumpfförmige Raumform gewählt. Der aus dem zumeist ebenflächigen Zuschnitt geformte Mantel wird zur Bildung des Außenteils 2 durch in Umfangsrichtung einander zugewendete Endabschnitte 4, 5 in einem Überlappungsbereich 6 miteinander verbunden. Weiters kann im Überlappungsbereich 6 und/oder umfänglich distanziert dazu zumindest ein Aufrissstreifen 7 angeordnet bzw. ausgebildet werden, wie dies hinlänglich bekannt ist. Dieser Aufrissstreifen 7 dient dazu, die Trennbarkeit für die Entsorgung des Behältnisses zu verbessern bzw. zu erleichtern.

Das in etwa eine kegelstumpfförmige Außenform aufweisende Außenteil 2 wird zumeist in einer eigenen Fertigungsstation aus dem ebenen Zuschnitt geformt, wobei dies beispielsweise in einem Wickelverfahren erfolgen kann. Anschließend wird das so vorgefertigte Außenteil 2 in das in der Fig. 1 vereinfacht dargestellte Formwerkzeug 1 zu dessen Formgebung eingelegt. Das Formwerkzeug 1 weist einen Formhohlraum 8 auf, dessen Raumform jener entspricht, welche ein später noch gezeigter Kombi-Verpackungsbehälter 9 aufweisen soll. Ist das unverformte Außenteil 2 in den Formhohlraum 8 eingelegt, kann dieses mit einem in der Fig. 2 vereinfacht dargestellten Spreizkern 10 bleibend umgeformt werden. Der Spreizkern 10 ist in Richtung seines Umfangs gesehen, mehrfach geteilt ausgebildet und weist somit mehrere Spreizkernsegmente 11 auf. Das Formwerkzeug 1, insbesondere dessen Formhohlraum 8, weist eine Formwerkzeugachse 12 auf, wobei die Teilungsebenen zur Bildung der Spreizkernsegmente 11 in dieser Formwerkzeugachse 12 verlaufend, jedoch umfänglich zueinander versetzt angeordnet sind. Die Teilungsanzahl des Spreizkerns 10 hängt vom herzustellenden Volumen bzw. den Außenabmessungen des Kombi-Verpackungsbehälters 9 ab. Die einzelnen Spreizkernsegmente 11 weisen an deren Außenseite eine Raumform auf, welche der herzustellenden Raumform des Außenteils 2, insbesondere den Formwandungen des Formhohlraums 8 entspricht.

Für die Durchführung des Umformvorganges des Außenteils 2 hin auf die gewünschte Raumform gemäß den den Formhohlraum 8 definierenden Formwandungen, wird der Spreizkern 10 nach dem Einsetzen des unverformten Außenteils 2 in den Formhohlraum 8 des Formwerkzeugs 1 ebenfalls in Richtung der Formwerkzeugachse 12 eingesetzt und anschließend zur Durchführung des Umformvorganges in radialer Richtung aufgeweitet. Durch das Vorsehen mehrerer Spreizkernsegmente 11 erfolgt der Umformvorgang des vor dem Umformvorgang die geradlinige Mantellinie 3 aufweisenden Außenteils 2. Die unverformte Mantellinie 3 des Außenteils 2 ist in strichlierten Linien in der Fig. 1 angedeutet.

Die radiale Verstellung der einzelnen Spreizkernsegmente 11 zueinander und die damit verbundene radiale Vergrößerung des Spreizkerns 10 führt zur bleibenden Umformung des manschettenförmigen Außenteils 2. Damit werden zumindest Teilabschnitte des Außenteils 2 im Axialschnitt gesehen über die im unverformten Zustand überwiegend geradlinig verlaufende Mantellinie 3 hinaus bleibend räumlich verformt. Dabei findet eine bleibende Dehnung das Außenteils 2 statt, welche nicht mehr selbsttätig in die geradlinig verlaufende Mantellinie zurückgeht. Die gleichzeitige und gleichmäßige radiale Verlagerung der einzelnen Spreizkernsegmente 11 von deren Ausgangsstellung hin in die unter Zwischenschaltung des Außenteils 2 anliegende Stellung an einer den Formhohlraum 8 definierenden Außenform 13 kann beispielsweise durch ein zumindest abschnittsweise kegelförmig ausgebildetes Stellelement erfolgen, welches mit einer dazu gegengleich ausgebildeten, kegelförmigen Ausnehmung in den einzelnen Spreizkernsegmenten 11 zusammenwirkt. Durch axiale Verstellung des nicht näher dargestellten Stellelements und der zusammenwirkenden, kegelförmig ausgebildeten Stellflächen werden die einzelnen Spreizkernsegmente 11 in radialer Richtung verstellt. Dadurch erfolgt in weiterer Folge der Umformvorgang des manschettenförmigen Außenteils 2.

Um eine axiale Verstellung der einzelnen Spreizkernsegmente 11 während des Formgebungsvorganges zu vermeiden, können diese jeweils flanschartige, sowie in radialer Richtung vorspringende Stützsegmente aufweisen, mit welchen diese in jeder Betriebsstellung des Spreizkerns 10 an der Außenform 13 in axialer Richtung daran abgestützt sind. Dies sowohl in der verkleinerten Stellung des Spreizkerns 10 als auch in der die Formgebung bewirkenden Arbeitsstellung. Um einen Zusammenhalt der einzelnen Spreizkernsegmente 11 zu erzielen, kann dieser zumindest zwei in Axialrichtung voneinander distanziert angeordnete, elastisch ausgebildete Halteelemente aufweisen. Diese können beispielsweise ringförmig umlaufend ausgebildet sein und aufgrund ihrer Vorspannung die einzelnen Spreizkernsegmente 11 nach deren Verstellung in die Arbeitsstellung wiederum in deren aneinander anliegende Stellung und somit Ruhestellung zurück verstellen. Damit kann auf zusätzliche, mechanisch betätigte Stellmittel verzichtet werden.

Nach erfolgtem Umformvorgang des Außenteils 2 wird der Spreizkern 10 aus dem Formhohlraum 8 heraus verstellt und es können nachfolgend durchzuführende Produktionsschritte zur Herstellung des Kombi-Verpackungsbehälters 9 durchgeführt werden. Dazu ist es möglich, das bleibend räumlich verformte Außenteil 2 entweder aus dem Formwerkzeug 1 zu entnehmen und dieses an eine weitere Arbeitsstation zu verbringen, oder das Außenteil 2 im Formwerkzeug 1 zu belassen und das gesamte Formwerkzeug 1 zu einer weiteren, nachfolgenden Arbeitsstation zu bewegen. Dies kann beispielsweise in bekannter Weise durch eine Rundtischanordnung erfolgen. Dabei ist auch eine Mehrfachanordnung der Formwerkzeuge 1 zur Formgebung, insbesondere der gleichzeitigen Formgebung von mehreren Außenteilen 2, möglich.

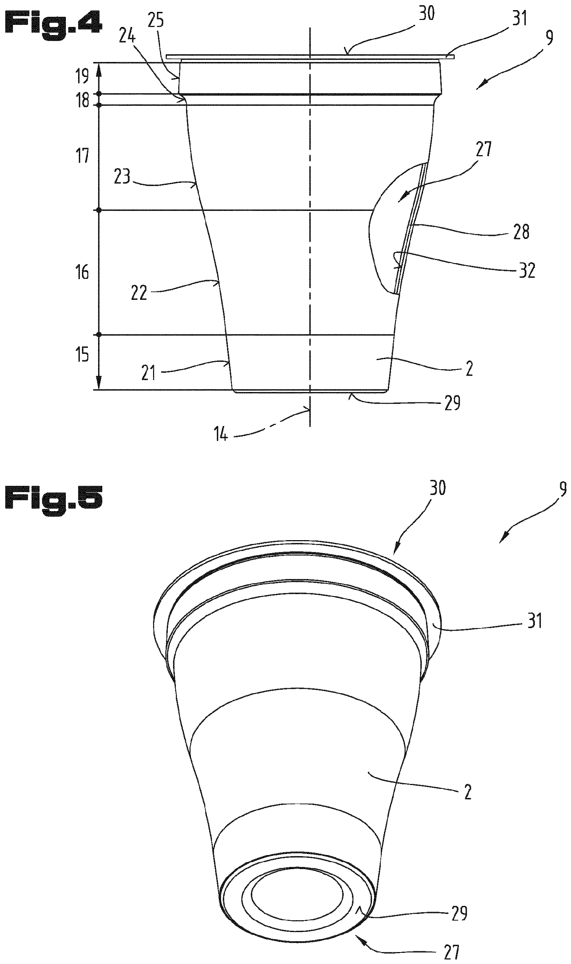

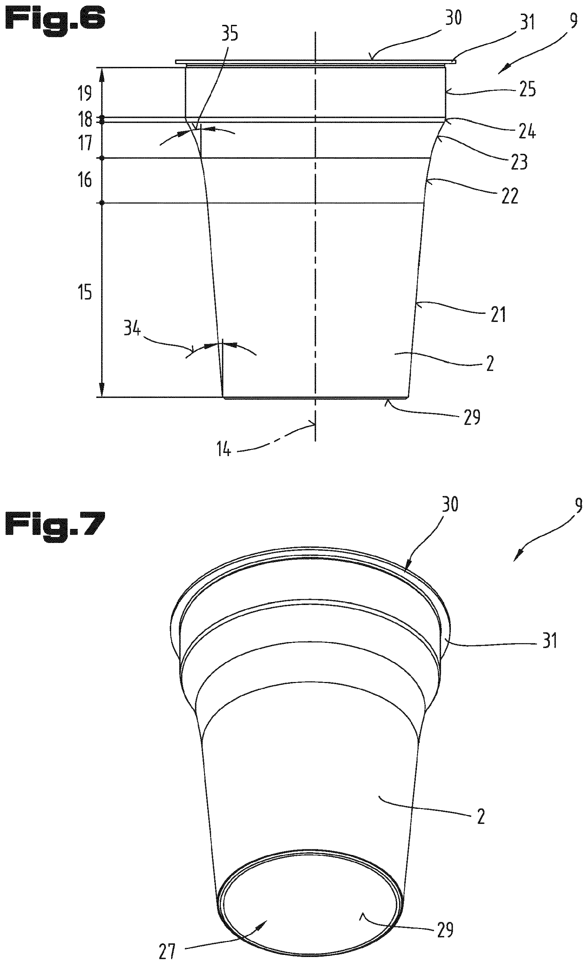

In den Fig. 4 und 5 sowie 6 und 7 sind jeweils unterschiedliche, mögliche Ausführungsformen des Kombi-Verpackungsbehälters 9 gezeigt, bei welchem das mantelförmige bzw. manschettenförmige Außenteil 2 zuvor im Formwerkzeug 1 durch den Spreizkern 10 mit seinen Spreizkernsegmenten 11 bleibend räumlich umgeformt worden ist.

Um den Werkstoff, insbesondere das Zellulosematerial, zur Bildung des Außenteils 2 besser, insbesondere rissfreier, bleibend umformen zu können, soll der Zuschnitt und/oder das umzuformende Außenteil 2 auf einen Feuchtigkeitsgehalt in einer unteren Grenze von 5 % und einer oberen Grenze von 15 %, insbesondere in einem Bereich zwischen 8 und 10 % relativer Feuchtigkeit konditioniert werden. Des Weiteren wird ein besseres Umformergebnis, insbesondere eine bleibende, dauernde plastische Verformung dadurch erreicht, wenn die Außenform 13 des Formwerkzeugs 1 in einem Temperaturbereich von 110 °C und 130 °C, insbesondere auf 120 °C erwärmt ist. Der Spreizkern 10, insbesondere dessen Spreizkernsegmente 11, soll eine Temperatur in einem Temperaturbereich zwischen 70 °C und 90 °C, insbesondere 80 °C aufweisen.

Das in der Fig. 3 dargestellte, mantelförmige bzw. manschettenförmige Außenteil 2 wird im Überlappungsbereich 6 in seiner Form fixiert gehalten. Zur Verbindung der beiden Endabschnitte 4, 5 wird auf zumindest einen der Endabschnitte 4, 5 des Zuschnitts ein erstes Klebemittel sowie zumindest ein zweites Klebemittel aufgetragen. Dies kann beispielsweise in Längserstreckung des Überlappungsbereichs 6 erfolgen, wobei das oder die Klebemittel beim Aufbringen beispielsweise eine Raupenform aufweisen. Eine voneinander distanzierte Anordnung der Kleberraupen kann vorgesehen werden. Dabei sind die beiden Klebemittel derart auszuwählen, dass diese zueinander eine unterschiedliche Abbindezeit aufweisen. Dies kann sich als günstig für den nachfolgenden Umformvorgang erweisen. Damit kann durch ein erstes der Klebemittel beim Verbindungsvorgang der beiden Endabschnitte 4, 5 im Überlappungsbereich 6 eine so große Haft- bzw. Haltekraft aufgebaut werden, dass die beiden Endabschnitt 4, 5 aneinander haften bleiben.

Die bleibende, räumliche Umformung des manschettenförmigen Außenteils 2 erfolgt in mehreren in Richtung einer Längsachse 14 angeordneten bzw. ausgebildeten Längsabschnitten 15 bis 20, wie dies beispielhaft in der Fig. 1 angedeutet ist. Dabei sei erwähnt, dass die Anzahl sowie Anordnung der Längsabschnitte 15 bis 20 hier nur beispielhaft für eine Vielzahl von weiteren Möglichkeiten gewählt ist. Im Bereich der einzelnen Längsabschnitte 15 bis 20 bilden sich zumeist abweichend von der geradlinig verlaufenden Mantellinie 3 jeweils Mantelteillinien 21 bis 26 aus, welche vereinfacht im rechten Teil der Fig. 1 in strichlierten Linien für das bereits umgeformte, manschettenförmige Außenteil 2 angedeutet sind. Dabei sind einzelne der Mantelteillinien 21 bis 26 über die im Axialschnitt gesehen überwiegend geradlinig verlaufende Mantellinie 3 hinaus bleibend räumlich verformt.

Bei der Umformung und dem Verlauf der einzelnen Mantelteillinien 23 bis 26 ist bei derartigen Kombi-Verpackungsbehältern 9 zur Bildung eines einfachen Formwerkzeuges 1 darauf zu achten, dass eine einfache Entformung bzw. Entnahme des Außenteils 2, gegebenenfalls des gesamten Kombi-Verpackungsbehälters 9, in axialer Richtung bezüglich der Formwerkzeugachse 12 möglich ist. Hinterschneidungen sind dabei möglichst zu vermeiden bzw. wenn derartige vorgesehen werden, nur geringfügig auszubilden.

Wie bereits zuvor beschrieben, erfolgt der Auftrag der zumindest zwei zueinander unterschiedlichen Klebemittel an zumindest einem der beiden Endabschnitte 4, 5, um so im Überlappungsbereich 6 ein Aneinanderhaften derselben zu erzielen. Für die Durchführung der Umformung des Außenteils 2 zur Bildung der bleibend räumlich verformten Längsabschnitte 15 bis 20 weist dann jenes Klebemittel, welches die ausreichend große Haftkraft aufbaut, noch einen Zustand auf, bei welchem die beiden aneinander haftenden Endabschnitte 4, 5 in zumindest jenen Längsabschnitten 15 bis 20 zueinander relativ bewegt werden können, die bleibend räumlich verformt werden. Damit wird auch in diesem Bereich eine einwandfreie Umformung des Außenteils 2 zur Bildung der bleibend räumlich verformten Längsabschnitte 15 bis 20 über dessen gesamten Umfang sichergestellt.

Das weitere bzw. zweite Klebemittel mit der gegenüber dem ersten Klebemittel eine längere Abbindezeit aufweisenden Eigenschaft, erreicht seine endgültige Härte im Bereich der miteinander verbundenen Längsabschnitte 4, 5 im Überlappungsabschnitt 6 erst nach der erfolgten Umformung des Außenteils 2. Dies bedeutet, dass jenes Klebemittel, mit der längeren Abbindezeit erst dann endgültig abbindet bzw. aushärtet, sobald der Umformvorgang des Außenteils 2 durchgeführt und abgeschlossen worden ist. Dadurch kann zuerst ein relatives Verlagern der beiden Endabschnitte 4, 5 während des Umformvorganges zueinander erfolgen, ohne dass dabei das oder die Klebemittel diese relative Bewegung verhindern würden. So kann auch im Überlappungsbereich 6, in welchem das Außenteil 2 eine doppelte Wandstärke aufweist, auch hier einwandfrei räumlich bleibend verformt werden. Die endgültige relative Fixierung der beiden Endabschnitte 4, 5 zueinander erfolgt dann durch das weitere bzw. zweite Klebemittel, bei dem die Abbindezeit länger gewählt worden ist und sich zumindest über den Umformvorgang hinaus erstreckt.

Für die Herstellung derartiger Kombi-Verpackungsbehälter 9, die mit einem manschettenförmigen Außenteil 2 versehen sind, gibt es unterschiedliche Herstellungsmöglichkeiten. Derartige Kombi-Verpackungsbehälter 9 sind in den Fig. 4 und 5 sowie 6 und 7 gezeigt.

Eine erste Möglichkeit besteht darin, einen becherförmigen Innenbehälter 27 sowie das entsprechende Außenteil 2 voneinander getrennt herzustellen und erst vor der Verwendung bzw. dem Einsatz das Außenteil 2 am Innenbehälter 27 anzubringen und dort zu halten. Dies hat den Vorteil, dass bei gleichartig ausgebildeten Innenbehältern 27 je nach dem darin aufzunehmenden Füllgut das entsprechend bedruckte Außenteil 2 appliziert wird.

Eine weitere Möglichkeit sieht vor, dass das manschettenförmige Außenteil 2 vor dem Tiefziehvorgang in das Formwerkzeug 1 eingelegt und anschließend durch Tiefziehen der Innenbehälter 27 direkt darin ausgebildet wird. Im Zuge dieses Tiefziehvorganges wird der becherförmige Innenbehälter 27 mit einem Behältermantel 28, einem Boden 29 und einem den Behältermantel 28 im Bereich seines offenen Endes 30 nach außen überragenden Flansch 31 ausgebildet bzw. ausgeformt. Im Zuge dieses Tiefziehvorganges wird der Innenbehälter 27, insbesondere dessen Behältermantel 28 an eine Innenseite 32 des manschettenförmigen Außenteils 2 zur Bildung des Kombi-Verpackungsbehälters 9 daran angelegt. Die gemeinsame Längsachse 14 des Außenteils 2 sowie des Innenbehälters 27, insbesondere dessen Behältermantel 28, erstreckt sich zwischen dem offenen Ende 30 und dem Boden 29. Der Behältermantel 28 mit dem Außenteil 2 bilden eine Behälterwand aus. Dieser Herstellvorgang wird bei der Herstellung der gegenständlichen Kombi-Verpackungsbehälter 9 angewendet.

Je nach Längsverlauf der umgeformten Mantellinie 3 bzw. deren Mantelteillinien 21 bis 26 können dabei die einzelnen Längsabschnitte 15 bis 20 vorgesehen sein, welche gegenüber der unverformten Ausgangslage unverformt bleiben und solche Längsabschnitte 15 bis 20, welche räumlich umgeformt werden.

Entsprechende Beispiele dazu sind in den Fig. 4 bis 7 dargestellt. Aus diesen Darstellungen ist zu ersehen, dass die Anzahl der zuvor beschriebenen Längsabschnitte 15 bis 20 je nach Formwahl variieren kann und frei wählbar ist. Wesentlich ist bei all diesen Formgebungen, dass in Richtung der Längsachse 14 jeweils mehrere Längsabschnitte 15 bis 20 vorgesehen sind, welche in radialer Richtung über die im Axialschnitt gesehen überwiegend geradlinig verlaufende Mantellinie 3 hinaus räumlich verformt sind.

Wie nun aus der Darstellung der Fig. 1 zu ersehen ist, ist zwischen den beiden bodenseitig angeordneten Längsabschnitten 15, 16 mit ihren Mantelteillinien 21, 22 nach der entsprechenden Umformung des Außenteils 2 eine Stapelschulter 33 ausgebildet. Dabei sind jene unmittelbar beidseits an die Stapelschulter 33 angrenzenden Längsabschnitte 15, 16 über die im Axialschnitt gesehen überwiegend geradlinig verlaufende Mantellinie 3 hinaus bleibend räumlich verformt. Damit kann beim Ineinanderstapeln gleichartiger Kombi-Verpackungsbehälter 9 ein Abstützen des Bodens 29 bzw. der eine Schnittkante ausbildenden Stirnseite des Außenteils 2 zur Stapelbildung daran erfolgen.

Weiters ist es möglich, dass im Axialschnitt gesehen, jeweils Neigungswinkel 34, 35 von unmittelbar benachbarten Mantelteillinien 21 bis 26 bezüglich der Längsachse 14 zueinander unterschiedlich ausgebildet ist. So können im Axialschnitt gesehen einzelne der Mantelteillinien 21 bis 26 im Bereich der bleibend räumlich verformten Längsabschnitte 15 bis 20 geradlinig verlaufend ausgerichtet sein bzw. werden. Weiters ist es möglich, dass im Axialschnitt gesehen, einzelne der Mantelteillinien 21 bis 26 im Bereich der bleibend räumlich verformten Längsabschnitte 15 bis 20 über deren Längsverlauf mit einer nicht linearen Radiusänderung ausgebildet werden. Damit bildet sich im Bereich des jeweiligen Längsabschnittes 15 bis 20 im Axialschnitt gesehen, ein Kurve mit einem unterschiedlichen Längsverlauf bzw. einem Radius bezüglich der Längsachse 14 aus. Dies kann von einem Radius bishin zu Kurven höherer Ordnung führen.

Somit dient zur Umformung des Außenteils 2 das hier gezeigte Formwerkzeug 1 mit seinem Spreizkern 10 und bildet ein Umformwerkzeug zur bleibenden Umformung und damit verbundenen Formgebung des aus einem überwiegenden Anteil an Zellulosematerial gebildeten Außenteils 2 aus. Damit wird es möglich, auf individuelle Formgestaltungen auch bei einer hohen Druckqualität auf die Wünsche des Abfüllers bzw. Kunden besser eingehen zu können. Dabei sei erwähnt, dass das auf die Oberfläche des Zuschnitts aufgebrachte Druckbild auf die nachfolgende Umformung abgestimmt ist. Bei jenen Längsabschnitten 15 bis 20, welche bleibend räumlich verformt sind, ist das Druckbild um den Dehnungsfaktor kleiner aufzubringen, um nach der Umformung die tatsächlich gewünschte Größe der Abbildung zu erhalten.

Bei bisher bekannten Verpackungsbehältern wurde der Innenbehälter 27 in einer entsprechenden Raumform tiefgezogen und anschließend mit einem Schrumpfschlauch etikettiert, wobei hier die Qualität des Druckbildes durch Verzerrungen beeinträchtigt war und darüber hinaus auch keine ausreichend hohen Festigkeiten des Gesamtverhältnisses erzielbar waren.

Durch das umfangreiche Vorverformen des Außenteils 2 vor dem Tiefziehen und dem Ausbilden des Innenbehälters 27 kann auf das Außenteil 2 ein entsprechendes Druckbild mit hoher Qualität aufgebracht werden, welches im Zuge des bleibenden Umformvorganges trotzdem eine ausreichende hohe Qualität beibehält. Durch die zusätzlichen, räumlich bleibenden Verformungen in den einzelnen Längsabschnitten 15 bis 20 kann aber auch noch die Festigkeit des gesamten Kombi-Verpackungsbehälters 9 erhöht werden. Dies trifft insbesondere für das Ergreifen und Erfassen bei der Entnahme des Füllgutes zu.

Abschließend sind hier einige allgemeine Angaben zur Bildung des Kombi-Verpackungsbehälters 9 angeführt, welche insbesondere das Tiefziehen, die dabei verwendeten Werkstoffe für den Innenbehälter 27 sowie das Außenteil 2 betreffen.

Der Werkstoff für die Bildung der umzuformenden Schicht, insbesondere der Folie, kann aus der Gruppe von Polypropylen (PP), Polystyrol (PS), Polyester, einem alternativen Kunststoff oder einem kompostierbaren Material gewählt sein. Es kann sowohl transparentes wie auch eingefärbtes Material verwendet werden. Der herzustellende becherförmige Innenbehälter 27 wird dabei unter Temperatur- und/oder Druckeinwirkung aus der Schicht bzw. Folie geformt.

Verpackungsbehälter aus Polypropylen (PP) weisen eine gute Festigkeit und Steifigkeit bei niedriger Dichte, bei gleichzeitig guter Spannungsrissbeständigkeit auf. Sie behalten ihre Eigenschaften auch bei höheren Temperaturen bei, wodurch auch eine Verpackung von warmem Gut bzw. eine Erwärmung des Inhaltes möglich ist.

Polystyrol (PS) ist in seiner Grundform klarsichtig mit hoher Steifigkeit und Härte. Es ist jedoch auch möglich, den Werkstoff einzufärben, um das Erscheinungsbild des Verpackungsbehälters an die jeweiligen Anforderungen anzupassen. Durch die Verwendung dieser Werkstoffe ist es aufgrund von deren hohen Festigkeiten möglich, die Wandstärken des Innenbehälters 27 auf ein Minimum zu reduzieren, was neben den Kosten auch das Gewicht reduziert und somit Vorteile unter anderem beim Transport der Verpackungsbehälter bringt. Weiters ergeben sich für Polystyrole Vorteile bei der wirtschaftlichen Verarbeitbarkeit und deren guten Formbarkeit. Es können sowohl Homopolymerisate aus Monostyrol, wie auch Copolymerisate oder Blends, eingesetzt werden. Die angegebenen Werte bzw. Festigkeiten werden mit handelsüblichen Polystyrolen mit einem Elastizitätsmodul nach den EN ISO 527 im Bereich von 1 x 10³ bis 5 x 10³ N/mm² erreicht.

Der Werkstoff Polypropylen (PP) weist gegenüber dem Werkstoff Polystyrol (PS) den Nachteil eines größeren Schrumpfverhaltens auf.

Die Polyester zählen dabei zur großen Familie der synthetischen Polymere. Damit wird der Vorteil erzielt, dass neben den geringen Materialkosten eine einfache Verarbeitbarkeit und gute Gebrauchseigenschaften sichergestellt sind.

Das manschettenförmige Außenteil 2 wird bevorzugt aus einem Kartonmaterial mit einer ausreichenden Festigkeit in Bezug auf die Aufnahme und Übertragung von insbesondere axial wirkenden Druckkräften gebildet und aus einem ebenflächigen Zuschnitt zu einem Mantel gewickelt, wie dies bereits hinlänglich bekannt ist. Der Zuschnitt wird zumeist in seiner unverformten ebenen Lage bedruckt sowie gegebenenfalls noch mit einer zusätzlichen Beschichtung versehen. Als Werkstoff wird zumeist ein faserförmiges Zellulosematerial verwendet, wobei dies auch ein im Recyclingverfahren hergestellter Karton oder Starkpapier sein kann. Wird eine Schicht bzw. Lage des Außenteils aus einem Recyclingmaterial gebildet, kann auf zumindest einer der Oberflächen eine zusätzliche Schicht aus einem hochwertigeren Papier angeordnet bzw. damit verbunden sein. Diese zusätzliche Schicht dient einer einwandfreien Bedruckung zur Herstellung von Verzierungen, Beschriftungen sowie Produktinformationen.

Das mantelartige Außenteil 2 führt zu einem zusätzlichen Verstärkung- bzw. Versteifungseffekt des Innenbehälters 27 und somit des gesamten Kombi-Verpackungsbehälters 9.

Damit ist zum einen eine hohe Festigkeit und gute Wärmeisolierung und zum anderen ein optimaler Lichtschutz für den Inhalt des Kombi-Verpackungsbehälters 9 gegeben.

Dabei kann insbesondere auch vorgesehen sein, dass der Karton im Bereich der Schnittkanten zusätzlich mit einem wasserabweisenden Material beschichtet oder versiegelt wird. Dies ist besonders dann von Vorteil, wenn die Kombi-Verpackungsbehälter einem erhöhten Feuchtigkeitszutritt ausgesetzt sind. Durch die Beschichtung des für das Außenteil 2 verwendeten Kartons mit einer wasserabweisenden Schicht wird nämlich verhindert, dass es in einer feuchten Umgebung zu einem Aufquellen des Kartons und schließlich zu einem Ablösen vom Behältermantel des Verpackungsbehälters kommt.

Das manschettenförmige Außenteil 2 wird aus einem zumeist ebenflächigen Zuschnitt zu einem Mantel gewickelten ist. Durch das Wickeln des Zuschnitts werden dann die einander zugewendeten Endabschnitte 4, 5 im Überlappungsbereich 6 miteinander verbunden. Dies erfolgt durch eine sogenannte Überlappungsnaht. Das Wickeln und das anschließende Verbinden der beiden Enden kann dabei, wie dies bereits aus dem Stand der Technik hinlänglich bekannt ist, zum Beispiel durch Verkleben erfolgen. Als Beispiel wird hier die EP 0 408 515 B1 genannt.

Als Werkstoff für das mantelartige bzw. manschettenförmige Außenteil kann Karton aber auch Starkpapier oder aber auch ein alternativer Kunststoff mit biologisch abbaubaren Eigenschaften verwendet werden. Insbesondere ist es auch möglich, einen Verbundwerkstoff, der aus mehreren Schichten unterschiedlicher Materialien, wie Karton, Kunststoff aber auch Metallfolien, aufgebaut ist, zu verwenden. Im Falle der Verwendung eines Kartonwerkstoffs kann vorgesehen sein, das entsprechende Außenteil 2 mit einer wasserabweisenden Schicht zu versehen. Dies kann z.B. durch Verwendung eines mit einer Kunststofffolie kaschierten Kartonstreifens, der entsprechend zugeschnitten wird, erfolgen.

Es ist von Vorteil, wenn im gebrauchsfertigen Zustand des Kombi-Verpackungsbehälters 9 das Kartonmaterial des mantelartigen Außenteils 2 im Wesentlichen in der Ebene und in Umfangsrichtung des mantelartigen Außenteils 2 orientierte Zellulosefasern aufweist, da bei einer eventuellen Feuchtigkeitsaufnahme des Kartonmaterials eine Quellung der Fasern in deren radialer Richtung stattfindet und somit die Festigkeit nicht negativ beeinträchtigt, wie dies durch eine Vergrößerung in deren Längsrichtung und somit einem möglichen Abrutschen des mantelartigen Außenteils vom Verpackungsbehälter der Fall ist.

Eine Alternative zu herkömmlichen, oft nicht mehr weiter verwendbaren und damit nach ihrem Gebrauch zu Abfall werdenden Packstoffen sind Verpackungen, welche zu ihrem überwiegenden Teil oder aber auch vollständig aus kompostierbaren Materialien gebildet sind. Sie werden aus biologisch abbaubaren Werkstoffen hergestellt und bestehen teilweise oder komplett aus nachwachsenden Rohstoffen, wie Stärke, Zellulose oder Polymilchsäure. Diese Werkstoffe eignen sich als Verpackungsmaterialien für verschiedene Produkte, zum Beispiel für Lebensmittel.

Der Ordnung halber sei abschließend darauf hingewiesen, dass zum besseren Verständnis des Aufbaus des Formwerkzeugs 1 sowie des Kombi-Verpackungsbehälters 9 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Kombi-Verpackungsbehälters 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

**Bezugszeichenaufstellung**

| | | | |
|---|---|---|---|
| 1 | Formwerkzeug | 31 | Flansch |
| 2 | Außenteil | 32 | Innenseite |
| 3 | Mantellinie | 33 | Stapelschulter |
| 4 | Endabschnitt | 34 | Neigungswinkel |
| 5 | Endabschnitt | 35 | Neigungswinke |
| | | | |
| 6 | Überlappungsbereich | | |
| 7 | Aufrissstreifen | | |
| 8 | Formhohlraum | | |
| 9 | Kombi-Verpackungsbehälter | | |
| 10 | Spreizkern | | |
| | | | |
| 11 | Spreizkernsegment | | |
| 12 | Formwerkzeugachse | | |
| 13 | Außenform | | |
| 14 | Längsachse | | |
| 15 | Längsabschnitt | | |
| | | | |
| 16 | Längsabschnitt | | |
| 17 | Längsabschnitt | | |
| 18 | Längsabschnitt | | |
| 19 | Längsabschnitt | | |
| 20 | Längsabschnitt | | |
| | | | |
| 21 | Mantelteillinie | | |
| 22 | Mantelteillinie | | |
| 23 | Mantelteillinie | | |
| 24 | Mantelteillinie | | |
| 25 | Mantelteillinie | | |
| | | | |
| 26 | Mantelteillinie | | |
| 27 | Innenbehälter | | |
| 28 | Behältermantel | | |
| 29 | Boden | | |
| 30 | Ende | | |

## Patentansprüche

1. Verfahren zur Herstellung eines Kombi-Verpackungsbehälters (9), bei dem aus einem Zuschnitt aus einer faserförmigen Zelluloselage ein Mantel mit einer im Axialschnitt gesehen überwiegend geradlinig verlaufenden Mantellinie (3) geformt wird und in Umfangsrichtung einander zugewendete Endabschnitte (4, 5) des Mantels in einem Überlappungsbereich (6) miteinander zur Bildung eines manschettenförmigen Außenteils (2) verbunden werden, anschließend in das manschettenförmige Außenteil (2) durch Tiefziehen ein becherförmiger Innenbehälter (27) mit einem Behältermantel (28), einem Boden (29) und einem den Behältermantel (28) im Bereich seines offenen Endes (30) nach außen überragenden Flansch (31) ausgeformt und dabei der Innenbehälter (27), insbesondere dessen Behältermantel (28), an eine Innenseite (32) des manschettenförmigen Außenteils (2) zur Bildung des Kombi-Verpackungsbehälters (9) angelegt wird, wobei sich eine gemeinsame Längsachse (14) zwischen dem offenen Ende (30) und dem Boden (29) erstreckt, **dadurch gekennzeichnet, dass** das aus dem Zuschnitt gebildete manschettenförmige Außenteil (2) vor dem Tiefziehen mittels eines über den Umfang mehrfach geteilt ausgebildeten Spreizkerns (10) in einer Außenform (13) eines Formwerkzeugs (1) in radialer Richtung bezüglich der Längsachse (14) sowie in mehreren in Richtung der Längsachse (14) angeordneten Längsabschnitten (15 bis 20) über die im Axialschnitt gesehen überwiegend geradlinig verlaufende Mantellinie (3) hinaus bleibend räumlich verformt wird, wobei im Bereich der einzelnen Längsabschnitte (15 bis 20) jeweils Mantelteillinien (21 bis 26) ausgebildet werden.

2. Verfahren nach Anspruch 1, **dadurch gekennzeichnet, dass** die Umformung des manschettenförmigen Außenteils (2) und der nachfolgende Tiefziehvorgang jeweils in voneinander getrennten Stationen, jedoch in ein und derselben Außenform (13) des Formwerkzeugs (1) durchgeführt werden.

3. Verfahren nach Anspruch 1 oder 2, **dadurch gekennzeichnet, dass** der Zuschnitt und/oder das daraus gebildete Außenteil (2) vor dem Umformvorgang auf einen Feuchtigkeitsgehalt in einer unteren Grenze von 5 % und einer oberen Grenze von 15 %, insbesondere in einem Bereich zwischen 8% und 10 % relativer Feuchtigkeit konditioniert wird.

4. Verfahren nach einem der vorhergehenden Ansprüche, **dadurch gekennzeichnet, dass** die Außenform (13) des Formwerkzeugs (1) für den Umformvorgang des Außenteils (2) auf eine Temperatur in einem Temperaturbereich zwischen 110 °C und 130 °C, insbesondere auf 120 °C erwärmt wird.

5. Verfahren nach einem der vorhergehenden Ansprüche, **dadurch gekennzeichnet, dass** der Spreizkern (10) des Formwerkzeugs (1) für den Umformvorgang des Außenteils (2) auf eine Temperatur in einem Temperaturbereich zwischen 70 °C und 90 °C, insbesondere auf 80 °C erwärmt wird.

6. Verfahren nach einem der vorhergehenden Ansprüche, **dadurch gekennzeichnet, dass** auf zumindest einen der Endabschnitte (4, 5) des Zuschnitts ein erstes Klebemittel sowie zumindest ein zweites Klebemittel aufgetragen werden, wobei die Klebemittel zueinander eine unterschiedliche Abbindezeit aufweisen.

7. Verfahren nach Anspruch 6, **dadurch gekennzeichnet, dass** durch eines der Klebemittel beim Verbindungsvorgang der beiden Endabschnitte (4, 5) im Überlappungsbereich (6) eine so große Haftkraft aufgebaut wird, dass die beiden Endabschnitte (4, 5) aneinander haften bleiben und bei der Umformung des Außenteils (2) zur Bildung der bleibend räumlich verformten Längsabschnitte (15 bis 20) die beiden aneinander haftenden Endabschnitte (4, 5) in zumindest jenen Längsabschnitten (15 bis 20) zueinander relativ bewegt werden, die bleibend räumlich verformt werden.

8. Verfahren nach Anspruch 6 oder 7, **dadurch gekennzeichnet, dass** das endgültige Abbinden und Aushärten jenes Klebemittels mit der längeren Abbindezeit im Bereich der miteinander verbundenen Längsabschnitte (15 bis 20) des Überlappungsbereichs (6) erst nach der erfolgten Umformung des Außenteils (2) durchgeführt wird.

9. Verfahren nach einem der vorhergehenden Ansprüche, **dadurch gekennzeichnet, dass** in einem dem Boden (29) benachbart angeordneten Längsabschnitt (15, 16) des Außenteils (2) eine Stapelschulter (33) ausgebildet wird, bei welcher jene unmittelbar beidseits an die Stapelschulter (33) angrenzenden Längsabschnitte (15, 16) über die im Axialschnitt gesehen überwiegend geradlinig verlaufende Mantellinie (3) hinaus bleibend räumlich verformt werden.

10. Verfahren nach einem der vorhergehenden Ansprüche, **dadurch gekennzeichnet, dass** im Axialschnitt gesehen jeweils Neigungswinkel (34, 35) von unmittelbar benachbarten Mantelteillinien (21 bis 26) bezüglich der Längsachse (14) zueinander unterschiedlich ausgebildet werden.

11. Verfahren nach einem der Ansprüche 1 bis 10, **dadurch gekennzeichnet, dass** im Axialschnitt gesehen einzelne der Mantelteillinien (21 bis 26) im Bereich der bleibend räumlich verformten Längsabschnitte (15 bis 20) geradlinig verlaufend ausgebildet werden.

12. Verfahren nach einem der Ansprüche 1 bis 10, **dadurch gekennzeichnet, dass** im Axialschnitt gesehen einzelne der Mantelteillinien (21 bis 26) im Bereich der bleibend räumlich verformten Längsabschnitte (15 bis 20) über deren Längsverlauf mit einer nicht linearen Radiusänderung ausgebildet werden.

13. Kombi-Verpackungsbehälter (9) umfassend einen becherförmigen Innenbehälter (27) mit einem Behältermantel (28), einem Boden (29) und mit einem im Bereich seines offenen Endes (30) den Behältermantel (28) nach außen überragenden Flansch (31), ein den Innenbehälter (27) an seinem Behältermantel (28) umgebendes manschettenförmiges Außenteil (2), welches in Umfangsrichtung einander zugewendete Endabschnitte (4, 5) aufweist, die in einem Überlappungsbereich (6) miteinander verbunden sind, wobei der Innenbehälter (27), insbesondere dessen Behältermantel (28), an einer Innenseite (32) des manschettenförmigen Außenteils (2) anliegend angeformt ist und der Behältermantel (28) sowie das Außenteil (2) eine Behälterwand ausbilden, wobei sich eine gemeinsame Längsachse (14) zwischen dem offenen Ende (30) und dem Boden (29) erstreckt, insbesondere hergestellt nach dem Verfahren gemäß der Ansprüche 1 bis 12, **dadurch gekennzeichnet, dass** das manschettenförmige Außenteil (2) der Behälterwand in radialer Richtung bezüglich der Längsachse (14) sowie in mehreren in Richtung der Längsachse (14) angeordneten Längsabschnitten (15 bis 20) über eine im Axialschnitt gesehen sowie im unverformten Zustand des Außenteils (2) überwiegend geradlinig verlaufende Mantellinie (3) hinaus bleibend räumlich verformt ist, und dabei die Behälterwand im Bereich der einzelnen Längsabschnitte (15 bis 20) im Axialschnitt gesehen jeweils Mantelteillinien (21 bis 26) ausbildet.

14. Kombi-Verpackungsbehälter (9) nach Anspruch 13, **dadurch gekennzeichnet, dass** in einem dem Boden (29) benachbart angeordneten Längsabschnitt (15, 16) der Behälterwand eine Stapelschulter (33) ausgebildet ist, bei welcher jene unmittelbar beidseits an die Stapelschulter (33) angrenzenden Längsabschnitte (15, 16) über die im Axialschnitt gesehen im unverformten Zustand des Außenteils (2) überwiegend geradlinig verlaufende Mantellinie (3) hinaus bleibend räumlich verformt sind.

15. Kombi-Verpackungsbehälter (9) nach Anspruch 13 oder 14, **dadurch gekennzeichnet, dass** im Axialschnitt gesehen jeweils Neigungswinkel (34, 35) von unmittelbar benachbart angeordneten Mantelteillinien (21 bis 26) bezüglich der Längsachse (14) zueinander unterschiedlich ausgebildet sind.

16. Kombi-Verpackungsbehälter (9) nach einem der Ansprüche 13 bis 15, **dadurch gekennzeichnet, dass** im Axialschnitt gesehen einzelne der Mantelteillinien (21 bis 26) im Bereich der bleibend räumlich verformten Längsabschnitte (15 bis 20) geradlinig verlaufend ausgebildet sind.

17. Kombi-Verpackungsbehälter (9) nach einem der Ansprüche 13 bis 15, **dadurch gekennzeichnet, dass** im Axialschnitt gesehen einzelne der Mantelteillinien (21 bis 26) im Bereich der bleibend räumlich verformten Längsabschnitte (15 bis 20) über deren Längsverlauf mit einer nicht linearen Radiusänderung ausgebildet sind.

## Claims

1. A method for producing a combi-packing container (9), in which a sheath having a generatrix (3) running predominantly in a straight line as seen in axial section is moulded from a blank consisting of a fibrous cellulose layer, and end sections (4, 5) of the sheath that face each other in the circumferential direction are connected to each other in an overlap region (6) to form a sleeve-like outer part (2), then a cup-shaped inner container (27) is formed by deep-drawing in the sleeve-like outer part (2), said inner container (27) having a container jacket (28), a base (29) and a flange (31), which projects outwards beyond the container jacket (28) in the region of an open end (30) thereof, and in the process the inner container (27), in particular the container jacket (28) thereof, is laid against an inner face (32) of the sleeve-like outer part (2) to form the combi-packing container (9), a common longitudinal axis (14) extending between the open end (30) and the base (29), **characterised in that** the sleeve-like outer part (2) formed from the blank is permanently spatially deformed in the radial direction in relation to the longitudinal axis (14) and in a plurality of longitudinal sections (15 to 20), which are arranged in the direction of the longitudinal axis (14) beyond the generatrix (3) running predominantly in a straight line as seen in axial section by means of a spreading core (10) divided multiple times over the circumference in an outer mould (13) of a die (1) before deep-drawing, wherein partial generatrices (21 to 26) are each formed in the region of the individual longitudinal sections (15 to 20).

2. The method according to claim 1, **characterised in that** the deformation of the sleeve-like outer part (2) and the subsequent deep-drawing process are each carried out in separate stations but in the same outer mould (13) of the die (1).

3. The method according to claim 1 or 2, **characterised in that** the blank and/or the outer part (2) formed therefrom are conditioned to a moisture content with a lower limit of 5% and an upper limit of 15%, in particular within a range between 8% and 10% relative humidity, before the deformation process.

4. The method according to any one of the preceding claims, **characterised in that** the outer mould (13) of the die (1) is heated to a temperature within a temperature range between 110°C and 130°C, in particular to 120°C, for the process of deforming the outer part (2).

5. The method according to any one of the preceding claims, **characterised in that** the spreading core (10) of the die (1) is heated to a temperature within a temperature range between 70°C and 90°C, in particular to 80°C, for the process of deforming the outer part (2).

6. The method according to any one of the preceding claims, **characterised in that** a first adhesive and at least one second adhesive are applied to at least one of the end sections (4, 5) of the blank, wherein the adhesives have a different bonding time from each other.

7. The method according to claim 6, **characterised in that** such an adhesive force is built up by one of the adhesives during the process of connecting the two end sections (4, 5) in the overlap region (6) that the two end sections (4, 5) remain adhered to each other and, when the outer part (2) is deformed to form the permanently spatially deformed longitudinal sections (15 to 20), the two end sections (4, 5) that adhere to each other are moved relative to each other in at least the longitudinal sections (15 to 20) that are permanently spatially deformed.

8. The method according to claim 6 or 7, **characterised in that** the final bonding and curing of the adhesive with the longer bonding time is carried out in the region of the longitudinal sections (15 to 20) of the overlap region (6) that are connected to each other only after the deformation of the outer part (2) is complete.

9. The method according to any one of the preceding claims, **characterised in that** a stacking shoulder (33) is formed in a longitudinal section (15, 16) of the outer part (2) arranged adjacently to the base (29), with which stacking shoulder (33) the longitudinal sections (15, 16) directly bordering the stacking shoulder (33) on both sides are permanently spatially deformed beyond the generatrix (3) running predominantly in a straight line as seen in axial section.

10. The method according to any one of the preceding claims, **characterised in that** inclination angles (34, 35) of directly adjacent partial generatrices (21 to 26) are each formed differently from each other in relation to the longitudinal axis (14), as seen in axial section.

11. The method according to any one of claims 1 to 10, **characterised in that** some of the partial generatrices (21 to 26) in the region of the permanently spatially deformed longitudinal sections (15 to 20) run in a straight line as seen in axial section.

12. The method according to any one of claims 1 to 10, **characterised in that** some of the partial generatrices (21 to 26) in the region of the permanently spatially deformed longitudinal sections (15 to 20) are formed with a non-linear change in radius over the longitudinal profile thereof, as seen in axial section.

13. A combi-packing container (9) comprising a cup-shaped inner container (27) having a container jacket (28), a base (29) and a flange (31), which projects outwards beyond the container jacket (28) in the region of an open end (30) thereof, a sleeve-like outer part (2), which surrounds the inner container (27) on the container jacket (28) thereof and has end sections (4, 5), which face each other in the circumferential direction and are connected to each other in an overlap region (6), the inner container (27), in particular the container jacket (28) thereof, being formed to lie against an inner face (32) of the sleeve-like outer part (2), and the container jacket (28) and the outer part (2) forming a container wall, a common longitudinal axis (14) extending between the open end (30) and the base (29), in particular produced by the method according to claims 1 to 12, **characterised in that** the sleeve-like outer part (2) of the container wall is permanently spatially deformed in the radial direction in relation to the longitudinal axis (14) and in a plurality of longitudinal sections (15 to 20) arranged in the direction of the longitudinal axis (14) beyond a generatrix (3) running predominantly in a straight line as seen in axial section and when the outer part (2) is in a non-deformed state, and in the process the container wall in each case forms partial generatrices (21 to 26) in the region of the individual longitudinal sections (15 to 20) as seen in axial section.

14. The combi-packing container (9) according to claim 13, **characterised in that** a stacking shoulder (33) is formed in a longitudinal section (15, 16) of the container wall arranged adjacently to the base (29), with which stacking shoulder (33) the longitudinal sections (15, 16) directly bordering the stacking shoulder (33) on both sides are permanently spatially deformed beyond the generatrix (3) running predominantly in a straight line as seen in axial section and when the outer part (2) is in the non-deformed state.

15. The combi-packing container (9) according to claim 13 or 14, **characterised in that** inclination angles (34, 35) of directly adjacently arranged partial generatrices (21 to 26) are each formed differently from each other in relation to the longitudinal axis (14), as seen in axial section.

16. The combi-packing container (9) according to any one of claims 13 to 15, **characterised in that** some of the partial generatrices (21 to 26) in the region of the permanently spatially deformed longitudinal sections (15 to 20) run in a straight line as seen in axial section.

17. The combi-packing container (9) according to any one of claims 13 to 15, **characterised in that** some of the partial generatrices (21 to 26) in the region of the permanently spatially deformed longitudinal sections (15 to 20) are formed with a non-linear change in radius over the longitudinal profile thereof, as seen in axial section.

## Revendications

1. Procédé de fabrication d'un récipient d'emballage combiné (9), dans lequel à partir d'une découpe dans une couche de cellulose fibreuse, une enveloppe présentant une génératrice (3) s'étendant essentiellement en ligne droite, vu en coupe axiale, est formée, et des sections d'extrémité (4, 5) de l'enveloppe tournées les unes vers les autres dans la direction circonférentielle sont raccordées les unes aux autres dans une zone de chevauchement (6) pour la formation d'une partie extérieure (2) en forme de manchette, ensuite un récipient intérieur (27) en forme de godet est formé par emboutissage dans la partie extérieure (2) en forme de manchette avec une enveloppe de récipient (28), un fond (29) et une bride (31) dépassant vers l'extérieur l'enveloppe de récipient (28) dans la zone de son extrémité ouverte (30), et ce faisant le récipient intérieur (27), en particulier son enveloppe de récipient (28), est appuyé contre un côté interne (32) de la partie extérieure (2) en forme de manchette pour la formation du récipient d'emballage combiné (9), un axe longitudinal (14) commun s'étendant entre l'extrémité ouverte (30) et le fond (29), **caractérisé en ce que**, avant l'emboutissage au moyen d'un noyau d'écartement (10) constitué de façon plusieurs fois divisée sur la circonférence dans un moule extérieur (13) d'un outil de moulage (1) dans la direction radiale par rapport à l'axe longitudinal (14) ainsi que dans plusieurs sections longitudinales (15 à 20) disposées en direction de l'axe longitudinal (14), la partie extérieure (2) en forme de manchette formée à partir de la découpe est déformée spatialement de façon permanente au-delà de la génératrice (3) s'étendant essentiellement en ligne droite, vu en coupe axiale, des génératrices partielles (21 à 26) étant respectivement constituées dans la zone des sections longitudinales (15 à 20) individuelles.

2. Procédé selon la revendication 1, **caractérisée en ce que** la transformation de la partie extérieure (2) en forme de manchette et le processus d'emboutissage qui suit sont effectués respectivement dans des postes séparés les uns des autres, cependant dans un même moule extérieur (13) de l'outil de moulage (1).

3. Procédé selon la revendication 1 ou 2, **caractérisé en ce que** la découpe et/ou la partie extérieure (2) formée à partir d'elle est conditionnée avant le processus de transformation à une teneur en humidité dans une limite inférieure de 5% et dans une limite supérieure de 15 %, en particulier dans une plage entre 8 % et 10 % d'humidité relative.

4. Procédé selon l'une des revendications précédentes, **caractérisé en ce que**, pour le processus de transformation de la partie extérieure (2), le moule extérieur (13) de l'outil de moulage (1) est chauffé à une température dans une plage de température de 110°C à 130 °C, en particulier à 120 °C.

5. Procédé selon l'une des revendications précédentes, **caractérisé en ce que**, pour le processus de transformation de la partie extérieure (2), le noyau d'écartement (10) de l'outil de moulage (1) est chauffé à une température dans une plage de température de 70 °C à 90 °C, en particulier à 80 °C.

6. Procédé selon l'une des revendications précédentes, **caractérisé en ce que**, sur au moins une des sections d'extrémité (4, 5) de la découpe, il est appliqué un premier adhésif ainsi qu'au moins un deuxième adhésif, les adhésifs présentant un temps de prise différent l'un de l'autre.

7. Procédé selon la revendication 6, **caractérisé en ce que**, sous l'action de l'un des adhésifs lors du processus de raccordement des deux sections d'extrémité (4, 5), il se développe une force d'adhérence si élevée dans la zone de chevauchement (6) que les deux sections d'extrémité (4, 5) demeurent en adhérence l'une avec l'autre et, lors de la transformation de la partie extérieure (2), pour la formation des sections longitudinales (15 à 20) qui sont déformées spatialement de façon permanente, les deux sections d'extrémité (4, 5) qui adhèrent l'une à l'autre sont déplacées l'une par rapport à l'autre au moins dans celles des sections longitudinales (15 à 20) qui sont déformées spatialement de façon permanente.

8. Procédé selon la revendication 6 ou 7, **caractérisé en ce que** la prise définitive et le durcissement de l'adhésif ayant le temps de prise le plus long dans la zone des sections longitudinales (15 à 20) de la zone de chevauchement (6) raccordées les unes aux autres ne sont effectués qu'une fois réalisée la transformation de la partie extérieure (2).

9. Procédé selon l'une des revendications précédentes, **caractérisé en ce que**, dans une section longitudinale (15, 16) de la partie extérieure (2) au voisinage du fond (29), il est constitué un épaulement d'empilage (33) dans lequel les sections longitudinales (15, 16) qui sont directement adjacentes des deux côtés à l'épaulement d'empilage (33) sont déformées spatialement de façon permanente au-delà de la génératrice (3) qui est essentiellement en ligne droite, vu en coupe axiale.

10. Procédé selon l'une des revendications précédentes, **caractérisé en ce que**, vu en coupe axiale, des angles d'inclinaison (34, 35) de génératrices (21 à 26) directement voisines sont respectivement constitués de façon différente les uns des autres en ce qui concerne l'axe longitudinal (14).

11. Procédé selon l'une des revendications 1 à 10, **caractérisé en ce que**, vu en coupe axiale, certaines des génératrices (21 à 26) sont, dans la zone des sections longitudinales (15 à 20) déformées spatialement de façon permanente, constituées en ligne droite.

12. Procédé selon l'une des revendications 1 à 10, **caractérisé en ce que**, vu en coupe axiale, certaines des génératrices (21 à 26) sont, dans la zone des sections longitudinales (15 à 20) déformées spatialement de façon permanente, constituées avec une variation de rayon non linéaire sur leur tracé longitudinal.

13. Récipient d'emballage combiné (9), comprenant un récipient intérieur (27) en forme de godet avec une enveloppe de récipient (28), un fond (29) et avec une bride (31) dépassant vers l'extérieur l'enveloppe de récipient (28) dans la zone de son extrémité (30) ouverte, une partie extérieure (2), en forme de manchette entourant le récipient intérieur (27) sur son enveloppe de récipient (28), qui présente des sections longitudinales (4, 5) tournées les uns vers les autres dans la direction circonférentielle qui sont raccordées les unes aux autres dans une zone de chevauchement (6), le récipient intérieur (27), en particulier son enveloppe de récipient (28), étant formé de façon adjacente à un côté intérieur (32) de la partie extérieure (2) en forme de manchette, et l'enveloppe de récipient (28) ainsi que la partie extérieure (2) constituant une paroi de récipient, un axe longitudinal (14) commun s'étendant entre l'extrémité ouverte (30) et le fond (29), en particulier fabriqué suivant le procédé selon les revendications 1 à 12, **caractérisé en ce que**, dans la direction radiale par rapport à l'axe longitudinal (14) ainsi que dans plusieurs sections longitudinales (15 à 20) disposées en direction de l'axe longitudinal (14), la partie extérieure (2) en forme de manchette de la paroi de récipient est déformée spatialement de façon permanente au-delà d'une génératrice (3) s'étendant essentiellement en ligne droite, vu en coupe axiale, ainsi que dans l'état non déformé de la partie extérieure (2), et ce faisant la paroi de récipient constitue respectivement des génératrices (21 à 26) dans la zone des sections longitudinales (15 à 20) individuelles, vu en coupe axiale.

14. Récipient d'emballage combiné (9) selon la revendication 13, **caractérisé en ce que**, dans une section longitudinale (15, 16), disposée au voisinage du fond (29), de la paroi de récipient, il est constitué un épaulement d'empilage (33) dans lequel les sections longitudinales (15, 16) qui sont directement adjacentes des deux côtés à l'épaulement d'empilage (33) sont déformées spatialement de façon permanente au-delà de la génératrice (3) s'étendant essentiellement en ligne droite dans l'état non déformé de la partie extérieure (2), vu en coupe axiale.

15. Récipient d'emballage combiné (9) selon la revendication 13 ou 14, **caractérisé en ce que**, vu en coupe axiale, des angles d'inclinaison (34, 35) de génératrices (21 à 26) disposées directement au voisinage les unes des autres sont constitués de façon différente les uns des autres en ce qui concerne l'axe longitudinal (14).

16. Récipient d'emballage combiné (9) selon l'une des revendications 13 à 15, **caractérisé en ce que**, vu en coupe axiale, certaines des génératrices (21 à 26) sont, dans la zone des sections longitudinales (15 à 20) déformées spatialement de façon permanente, constituées en ligne droite.

17. Récipient d'emballage combiné (9) selon l'une des revendications 13 à 15, **caractérisé en ce que**, vu en coupe axiale, certaines des génératrices (21 à 26) sont, dans la zone des sections longitudinales (15 à 20) déformées spatialement de façon permanente, constituées avec une variation de rayon non linéaire sur leur tracé longitudinal.
